# EUROPÄISCHE PATENTANMELDUNG

(11) **EP 4 718 175 A1**
(43) Veröffentlichungstag der Anmeldung: **01.04.2026**
(21) Anmeldenummer: 24203279.5
(22) Anmeldetag: 27.09.2024
(51) Int. Cl.: G05B 19/042

(54) **KONFIGURIEREN VON SCHULUNGSANLAGEN FÜR EIN OPERATORTRAINING**

(71) Anmelder: Siemens Aktiengesellschaft, 80333 München (DE)
(72) Erfinder: Lutz, Benjamin, 76327 Pfinztal (DE); Wolf, Gerrit, 76297 Stutensee (DE)
(74) Vertreter: Siemens Patent Attorneys

(57) **Zusammenfassung**

Die Erfindung betrifft ein Verfahren, umfassend:
a) Durch ein computerimplementiertes Werkzeug, Erzeugen einer ersten Konfiguration für eine erste Gruppe (2) von real in der technischen Anlage verwendeten Automatisierungsgeräten,
b) Durch das computerimplementierte Werkzeug, Zuweisen der ersten Konfiguration zu der ersten Gruppe (2) von real in der technischen Anlage verwendeten Automatisierungsgeräten,
c) Durch das computerimplementierte Werkzeug, Übertragen der ersten Konfiguration an die erste Gruppe (2) von real in der technischen Anlage verwendeten Automatisierungsgeräten,
d) Durch das computerimplementierte Werkzeug, Erzeugen einer zweiten Konfiguration für eine zweite, von der ersten Gruppe (2) verschiedenen Gruppe (3) von real in der technischen Anlage verwendeten Automatisierungsgeräten,
e) Durch das computerimplementierte Werkzeug, Zuweisen der zweiten Konfiguration zu der zweiten Gruppe (3) von real in der technischen Anlage verwendeten Automatisierungsgeräten,
f) Durch das computerimplementierte Werkzeug, Übertragen der ersten Konfiguration an die zweite Gruppe (3) von real in der technischen Anlage verwendeten Automatisierungsgeräten,
g) Durch das computerimplementierte Werkzeug, zusätzliches Zuweisen der ersten Konfiguration zu einer ersten Gruppe (4) von virtuellen Automatisierungsgeräten,
h) Durch das computerimplementierte Werkzeug, Übertragen der zugewiesenen ersten Konfiguration an eine computerimplementierte Virtualisierungsumgebung, welche die erste Gruppe (4) von virtuellen Automatisierungsgeräte bereitstellt,
i) Durch das computerimplementierte Werkzeug, zusätzliches Zuweisen der zweiten Konfiguration zu der ersten Gruppe (4) von virtuellen Automatisierungsgeräten,
j) Durch das computerimplementierte Werkzeug, Übertragen der zugewiesenen ersten Konfiguration an eine computerimplementierte Virtualisierungsumgebung, welche die erste Gruppe (4) von virtuellen Automatisierungsgeräte bereitstellt.

## Beschreibung

Die Erfindung betrifft ein computerimplementiertes Werkzeug zum Erzeugen einer Automatisierung für eine technische Anlage, insbesondere Prozess- oder Fertigungsanlage. Außerdem betrifft die Erfindung ein Automatisierungssystem und ein Verfahren.

Moderne verfahrenstechnische Anlagen sowie die dazu gehörigen Automatisierungssysteme werden immer umfangreicher, größer und komplexer. Dies bedingt ein möglichst realitätsgetreues, regelmäßiges und wissensgenaues Training der Anlagenoperatoren. Sehr hohe Ausfälle von Produktionskapazitäten aber auch das Auftreten von Unfällen sind nicht selten der Fehlbedienung durch Operatoren zuzuschreiben. Deshalb besitzen vor allem Anlagen, welche sicherheits- und verfügbarkeitskritischen Bestimmungen unterliegen, eine Schulungsanlage (Operator Training System - OTS). Diese wird zur Schulung von neuem Personal, neuen Anlagenteilen und -funktionen, aber vor allem auch für den regelmäßigen Wissenserhalt eingesetzt. Dabei werden sowohl bekannte, aber auch unbekannte Produktionsszenarien geschult.

Es ist gängige Praxis, für die Schulungsanlage ein Abbild der Automatisierung der realen Anlage zu erstellen. Dabei werden die in der realen Anlage verwendeten Automatisierungsgeräte und Operator Station Server als Duplikat angelegt, damit der Operator sich im gewohnten Umfeld bewegen kann und das Verhalten der Automatisierung exakt dem zu erwartenden Verhalten der realen technischen Anlage entspricht. Um dies zu ermöglichen, ist besteht eine Anforderung an die Schulungsanlage darin, konsistent zur produktiven Anlage zu sein bzw. dem realen Anlagenbild zu entsprechen. An den Anlagen werden aber ständig Änderungen, Wartungen und Verbesserungen vorgenommen, was, in Kombination mit Abnutzungsprozessen in der Anlage, das Verhalten der realen technischen Anlage im Vergleich zur Schulungsanlage ändern kann

Typischerweise werden Operatoren geschult, bevor sie an der realen Anlage bedienen und beobachten dürfen. Geschult wird dabei nicht nur der Regelbetrieb, sondern insbesondere auch diverse Ausnahmesituationen, die im Rahmen der Schulung herbeigeführt werden. Die Schulungen erfolgen durch das Operator Training System, das im Wesentlichen aus denselben Automatisierungskomponenten (Operator Station Server, Automatisierungsgeräten usw.) wie die der realen Anlage aufgebaut ist. Lediglich der eigentliche (verfahrenstechnische) Prozess, der auf der Anlage abläuft, wird durch ein Simulationsmodell ersetzt. Das Simulationsmodell wird auch genutzt, um gezielt Ausnahmesituationen zu Schulungszwecken herbeiführen zu können.

Hierbei entstehen zahlreiche "Duplikate" der realen Anlage für die Operatorschulungen in Bezug auf die verwendeten Automatisierungen und Operator Station Server. Dies führt zu den folgenden Problemen:
- Wahrung der Konsistenz zwischen produktiver Anlage und Schulungsanlage im Lebenszyklus
- Hohes Maß an Wartung und Pflege der Schulungsanlage notwendig, insbesondere dann, wenn im laufenden Betrieb Projektierungsänderungen vorgenommen werden, die zunächst (als relevant) und entsprechend in der Schulungsanlage nachgezogen werden müssen
- Skalierbarkeit eingeschränkt, da eine Schulungsanlage meist dem Abbild einer produktiven Anlage entspricht, auch wenn für bestimmte Trainings nur ein dedizierter Anlagenteil notwendig wäre
- Aktualisierung der Schulungsanlage durch separates Trainingspersonal / Verantwortliche notwendig. In der Regel verliert die Nutzung des OTS seinen Sinn, wenn es nicht mehr weiter betreut und gepflegt wird. Die Automatisierung hingegen wird regelmäßig gewartet und überarbeitet.
- Notwendige Vereinfachungen, um bestimmte Szenarien zu trainieren und andere Teile "auszuklammern". Dies ist oft sehr aufwendig, da es Operatoren, Verfahrenstechniker und Automatisierungstechniker bedarf, um ein gemeinsames Verständnis für eine Trainingssituation zu erreichen. Als Beispiel werden Eigenschaften zur Erhöhung der Verfügbarkeit (redundant ausgelegte Geräte) in einer Schulungsanlage komplett vernachlässigt.
- Gerätebedarf, da für jede Schulungsanlage nahezu derselbe Umfang an Geräten benötigt wird wie bei der produktiven Anlage.

In der EP 3 151 217 A1 ist ein Engineering System eines Leitsystems offenbart, bei welchem automatisierungstechnische Konfigurationen entweder realen Automatisierungsgeräten oder virtuellen Automatisierungsgeräten zugeordnet werden können. Dieses Engineering System kann die zuvor erläuterten Nachteile nicht überwinden.

Der Erfindung liegt die Aufgabe zugrunde, ein computerimplementiertes Werkzeug zum Erzeugen einer Automatisierung anzugeben, welches die zuvor genannten Nachteile überwindet und eine effiziente und exakte Schulung für Operatoren von Leitsystemen technischer Anlagen ermöglicht.

Diese Aufgabe wird gelöst durch ein computerimplementiertes Werkzeug zum Erzeugen einer Automatisierung für eine technische Anlage, insbesondere Prozess- oder Fertigungsanlage mit den Merkmalen des Anspruchs 1. Außerdem wird die Aufgabe gelöst durch ein Automatisierungssystem nach Anspruch 5. Zudem wird die Aufgabe gelöst durch ein Verfahren nach Anspruch 7 und durch die Verwendung eines Automatisierungssystems zur Schulung eines Operators nach Anspruch 10. Vorteilhafte Weiterbildungen ergeben sich aus den abhängigen Ansprüchen.

Ein computerimplementiertes Werkzeug zum Erzeugen einer Automatisierung für eine technische Anlage, insbesondere Prozess- oder Fertigungsanlage, ist dazu ausgebildet:
- eine erste Konfiguration für eine erste Gruppe von real in der technischen Anlage verwendeten Automatisierungsgeräten zu erzeugen, die erste Konfiguration der ersten Gruppe von real in der technischen Anlage verwendeten Automatisierungsgeräten zuzuweisen und die erste Konfiguration an die erste Gruppe von real in der technischen Anlage verwendeten Automatisierungsgeräten zu übertragen, und
- eine zweite Konfiguration für eine zweite, von der ersten Gruppe verschiedenen Gruppe von real in der technischen Anlage verwendeten Automatisierungsgeräten zu erzeugen, die zweite Konfiguration der zweiten Gruppe von real in der technischen Anlage verwendeten Automatisierungsgeräten zuzuweisen und die zweite Konfiguration an die zweite Gruppe von real in der technischen Anlage verwendeten Automatisierungsgeräten zu übertragen.

Unter einer Automatisierung wird die Fähigkeit sogenannter Automatisierungsgeräte zur selbständigen (automatisierten) Erfassung und Beeinflussung physikalischer Größen mithilfe technischer Mittel verstanden. Dabei werden in der Regel Maschinen, Anlagen oder sonstige Einrichtungen in die Lage versetzt, selbsttätig zu arbeiten. Die "Automatisierung" umfasst wenigstens eine Parametrierung der Komponenten der Anlage und eine Interaktion der Komponenten mit weiteren Komponenten.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Das computerimplementierte Werkzeug, das beispielsweise auf einem sogenannten Engineering Station Server eines Leitsystems für die technische Anlage implementiert sein kann, ist mit anderen Worten dazu ausgebildet, wenigstens zwei verschiedene Konfigurationen zu erzeugen und sie wenigstens zwei Gruppen von Automatisierungsgeräten zuzuweisen. Automatisierungsgeräte werden dabei zur Realisierung einer Automatisierung benutzt und können beispielsweise speicherprogrammierbare Steuerungen oder Leitsysteme sein, die eine übergeordnete Steuerungs-funktion für untergeordnete speicherprogrammierbare Steuerungen darstellen. Die verschiedenen Gruppen können dabei gemeinsame (reale) Automatisierungsgeräte aufweisen, es können also Schnittmengen existieren. Es wird jedoch davon ausgegangen, dass sich die Gruppen wenigstens hinsichtlich eines Automatisierungsgerätes voneinander unterscheiden.

Bei den erzeugten, zugewiesenen und übertragenen Konfigurationen kann es sich, ohne sich darauf zu beschränken, um Anlagenbilder, CFC-basierte Pläne, SFC-basierte Pläne, Prozessobjekte und/oder Konnektivitätsobjekte handeln. Bei den Konnektivitätsobjekten handelt es sich dabei um spezielle Schnittstellen, die es ermöglichen, verschiedene Systeme und Geräte in ein Leitsystem zu integrieren. Sie stellen eine Kommunikation zwischen dem Leitsystem und externen Geräten oder Systemen wie z.B. speicherprogrammierbaren Steuerungen (SPS), Feldgeräten oder anderen Leitsystemen her. Beispiele hierfür sind eine OPC- oder eine Profibus-Schnittstelle. Prozessobjekte sind softwaretechnische Repräsentationen von realen Anlagenkomponenten und Prozessen. Sie dienen dazu, die Steuerung und Überwachung von industriellen Prozessen zu vereinfachen und zu standardisieren. Prozessobjekte können beispielsweise als Funktionsbausteine ausgebildet sein, die vorgefertigte Softwaremodule für spezifische Steuerungs- und Regelungsaufgaben darstellen.

Das computerimplementierte Werkzeug ist erfindungsgemäß dazu ausgebildet,
- die erste Konfiguration zusätzlich einer ersten Gruppe von virtuellen Automatisierungsgeräten zuzuweisen und die zugewiesene erste Konfiguration an eine computerimplementierte Virtualisierungsumgebung zu übertragen, welche die erste Gruppe von virtuellen Automatisierungsgeräten bereitstellt, und
- die zweite Konfiguration zusätzlich der ersten Gruppe von virtuellen Automatisierungsgeräten und die zugewiesene erste Konfiguration an die computerimplementierte Virtualisierungsumgebung zu übertragen, welche die erste Gruppe von virtuellen Automatisierungsgeräten bereitstellt.

Auch bei den virtuellen Automatisierungsgeräten können die verschiedenen Gruppen gemeinsame (virtuelle) Automatisierungsgeräte aufweisen, es können also Schnittmengen existieren.

Es wird jedoch davon ausgegangen, dass sich die Gruppen wenigstens hinsichtlich eines (virtuellen) Automatisierungsgerätes voneinander unterscheiden.

Die virtuellen Automatisierungsgeräte werden von einer hierfür geeigneten und ausgebildeten Virtualisierungsumgebung wie der Simulationsplattform SIMIT der Firma Siemens zur Verfügung gestellt. Die entsprechend konfigurierten Automatisierungsgeräte können als Schulungsunterlage zur Schulung von Operatoren eines Leitsystems verwendet werden.

Das erfindungsgemäße computerimplementierte Werkzeug ermöglicht es dabei, die virtuellen Schulungsanlagen (für Operatoren) gemeinsam und, im Hinblick auf die Konfiguration, abweichend zur produktiven Anlage (den realen, konfigurierten Automatisierungsgeräten) in einem zentralen Engineering projektieren zu können. Zum Zwecke der Modularisierung, Zuverlässigkeit und Ausbaufähigkeit von technischen Anlagen verfügen die Schulungsanlagen oftmals über wesentlich mehr Automatisierungsgeräte (und ggf. Operator Station Server) als für den Betrieb notwendig sind. Spezifisch und flexible können mithilfe des erfindungsgemäßen computerimplementierten Werkzeuges die notwendigen und vor allem für den Schulungszweck ausreichenden Automatisierungsgeräte - auch für unterschiedliche Schulungsanlagen (unterschiedliche Trainingsszenarien für dieselbe produktive Anlage) parallel festgelegt und zugewiesen werden.

Durch die Erfindung es möglich, unter der Voraussetzung, abweichende Zuweisungen der virtuellen Automatisierungsgeräte in Bezug auf die produktive, realen Automatisierungsgeräte vorzunehmen, um den Ressourcenvorteil von virtuellen Automatisierungen nutzen zu können. Virtuelle Automatisierungen sind auf herkömmlichen Servern lauffähig und im Hinblick auf Speicherbedarf "unbeschränkt". Auch wenn in gewissem Maße die Echtzeitfähigkeit eingeschränkt werden kann, wenn die Server "überladen" werden, hat dies keine negativen Rückwirkungen, da in der Simulation und somit auch in den Schulungsanlagen mit virtuellen Zeitscheiben gearbeitet wird.

Bevorzugt ist das computerimplementierte Werkzeug dazu ausgebildet, einen Status der jeweiligen Übertragung der Konfigurationen an die realen und virtuellen Automatisierungsgeräte zu ermitteln und visuell darzustellen. Hierdurch wird es auf einfache, intuitive Art und Weise ermöglicht, zu erkennen, ob Inkonsistenzen zwischen dem Übertragungs-/Ladestatus der realen und dem der virtuellen Automatisierungsgeräte bestehen. Hieraufhin kann der Operator bzw. der Projekteuer des Leitsystems adäquate Maßnahmen ergreifen.

Die Erfindung ist nicht darauf beschränkt, dass das computerimplementierte Werkzeug die erste und zweite Konfiguration der ersten Gruppe von Automatisierungsgeräten zuweist. Vielmehr kann es dazu ausgebildet sein, die erste oder die zweite Konfiguration zusätzlich einer zweiten, von der ersten Gruppe verschiedenen Gruppe von virtuellen Automatisierungsgeräten zuzuweisen und die zugewiesene erste Konfiguration oder zweite Konfiguration an die computerimplementierte Virtualisierungsumgebung zu übertragen, welche die erste Gruppe und die zweite Gruppe von virtuellen Automatisierungsgeräten bereitstellt.

Die zuvor formulierte Aufgabe wird zudem gelöst durch ein Automatisierungssystem, umfassend einen Engineering Station Server mit einem hierauf computerimplementierten Werkzeug, das wie zuvor erläutert ausgebildet ist, und einen Virtualisierungsrechner mit einer hierauf computerimplementierten Virtualisierungsumgebung.

Unter einem "Engineering Station Server" wird vorliegend ein Server verstanden, der dazu ausgebildet ist, verschiedene Hardware- und Software-Projekte für ein Leitsystem einer technischen Anlage zu erstellen, verwalten, archivieren und dokumentieren. Mithilfe von speziellen computer-implementierten Software-Entwurfswerkzeugen (Engineering Toolset) sowie vorgefertigten Bausteinen und Plänen kann mittels des Engineering Station Servers ein Zusammenspiel von leit-technischen Geräten und Einrichtungen der technischen Anlage geplant und verwaltet werden. Ein Beispiel hierfür ist ein SIMATIC Manager Server der Firma SIEMENS.

Ein Virtualisierungsrechner kann ein Standard-PC oder ein speziell für die Virtualisierung von Automatisierungsgeräten ausgebildeter Rechner sein. Die hierauf implementierte Virtualisierungsumgebung kann beispielsweise Teil der Simulationsplattform SIMIT der Firma Siemens sein.

Bevorzugt ist der Virtualisierungsrechner dabei dazu ausgebildet, die von dem Engineering Station Server an den Virtualisierungsrechner übermittelten Konfigurationen dafür zu verwenden, die virtuellen Automatisierungsgeräte zu betreiben.

Die Bedienung und Beobachtung der automatisierten Automatisierungsgeräte bzw. die Schulung des Operators an den virtuellen Automatisierungsgeräten kann mittels eines Operator Station Servers erfolgen. Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungs-systemen der technischen Anlage her und gibt Daten der technischen Anlage an sogenannte Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem Leitsystem wird im vorliegenden Kontext ein computergestütztes, technisches System verstanden, das Funktionalitäten zum Darstellen, Bedienen und Leiten der technischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus kann das Leitsystem u.a. Mittel zur Visualisierung der verfahrenstechnischen Anlage und zu einem Engineering aufweisen. Das Leitsystem kann optional auch weitere Recheneinheiten für komplexere Regelungen und Systeme zur Datenspeicherung und -verarbeitung umfassen.

Die zuvor formulierte Aufgabe wird zudem gelöst durch ein Verfahren, umfassend die folgenden Schritte:
a) Durch ein computerimplementiertes Werkzeug, Erzeugen einer ersten Konfiguration für eine erste Gruppe von real in der technischen Anlage verwendeten Automatisierungsgeräten,
b) Durch das computerimplementierte Werkzeug, Zuweisen der ersten Konfiguration zu der ersten Gruppe von real in der technischen Anlage verwendeten Automatisierungsgeräten,
c) Durch das computerimplementierte Werkzeug, Übertragen der ersten Konfiguration an die erste Gruppe von real in der technischen Anlage verwendeten Automatisierungsgeräten,
d) Durch das computerimplementierte Werkzeug, Erzeugen einer zweiten Konfiguration für eine zweite, von der ersten Gruppe verschiedenen Gruppe von real in der technischen Anlage verwendeten Automatisierungsgeräten,
e) Durch das computerimplementierte Werkzeug, Zuweisen der zweiten Konfiguration zu der zweiten Gruppe von real in der technischen Anlage verwendeten Automatisierungsgeräten,
f) Durch das computerimplementierte Werkzeug, Übertragen der ersten Konfiguration an die zweite Gruppe von real in der technischen Anlage verwendeten Automatisierungsgeräten,
g) Durch das computerimplementierte Werkzeug, zusätzliches Zuweisen der ersten Konfiguration zu einer ersten Gruppe von virtuellen Automatisierungsgeräten,
h) Durch das computerimplementierte Werkzeug, Übertragen der zugewiesenen ersten Konfiguration an eine computerimplementierte Virtualisierungsumgebung, welche die erste Gruppe von virtuellen Automatisierungsgeräte bereitstellt,
i) Durch das computerimplementierte Werkzeug, zusätzliches Zuweisen der zweiten Konfiguration zu der ersten Gruppe von virtuellen Automatisierungsgeräten,
j) Durch das computerimplementierte Werkzeug, Übertragen der zugewiesenen ersten Konfiguration an eine computerimplementierte Virtualisierungsumgebung, welche die erste Gruppe von virtuellen Automatisierungsgeräte bereitstellt.

Die erste oder die zweite Konfiguration können durch das computerimplementierte Werkzeug zusätzlich einer zweiten, von der ersten Gruppe verschiedenen Gruppe von virtuellen Automatisierungsgeräten zugewiesen werden, und die zugewiesene erste Konfiguration oder zweite Konfiguration können an die computerimplementierte Virtualisierungsumgebung übertragen werden, welche die erste Gruppe und die zweite Gruppe von virtuellen Automatisierungsgeräten bereitstellt.

Ganz besonders bevorzugt bietet der Operator Station Server den ersten zeitlichen Verlauf des zu den Messwerten gehörigen ersten Alarmstatus und den zweiten zeitlichen Verlauf des zu den Messwerten oder zu den weiteren Messwerten des Weiteren technischen Objektes gehörigen zweiten Alarmstatus an den Operator Station Client überträgt und der Operator Station Client diese dem Operator der technischen Anlage visuell in dem gemeinsamen Verlaufsdiagramm dar.

Die virtuellen Automatisierungsgeräte können durch die computerimplementierte Virtualisierungsumgebung unter Verwendung der ersten, und gegebenenfalls der zweiten, Konfiguration betrieben werden.

Die zuvor formulierte Aufgabe wird zudem gelöst durch eine Verwendung eines Automatisierungssystems, das wie zuvor erläutert ist, zur Schulung eines Operators einer technischen Anlage.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: einen ersten zeitlichen Verlauf von Messwerten;
- FIG 2: einen zweiten zeitlichen Verlauf von Messwerten;
- FIG 3: eine Überlagerung des ersten und des zweiten zeitlichen Verlaufs der Messwerte;
- FIG 4: eine visuelle Darstellung eines Anlagenbildes mit der Überlagerung gemäß FIG 4; und
- FIG 5: ein Leitsystem in einer schematischen Darstellung.

Im Folgenden wird ein Beispiel eines erfindungsgemäßen computerimplementierten Werkzeuges und ein dessen Verwendung zur Schulung eines Operators einer technischen Anlage wie einer Fertigungs- oder Prozessanlage ("Plant") erläutert. Dabei wird angenommen, dass die technische Anlage die realen (physikalisch vorhandenen) Automatisierungsgeräte OS1, OS2, OS3, AS1, AS2 und AS3 aufweist. Zudem umfasst das Automatisierungssystem einen Virtualisierungrechner mit einer hierauf computerimplementierten Virtualisierungsumgebung. In dieser Virtualisierungsumgbeung werden die virtuellen Automatisierungsgeräte OTS1_OS1, OTS2_OS1, OTS1_vAS1 und OTS2_vAS1 bereitgestellt.

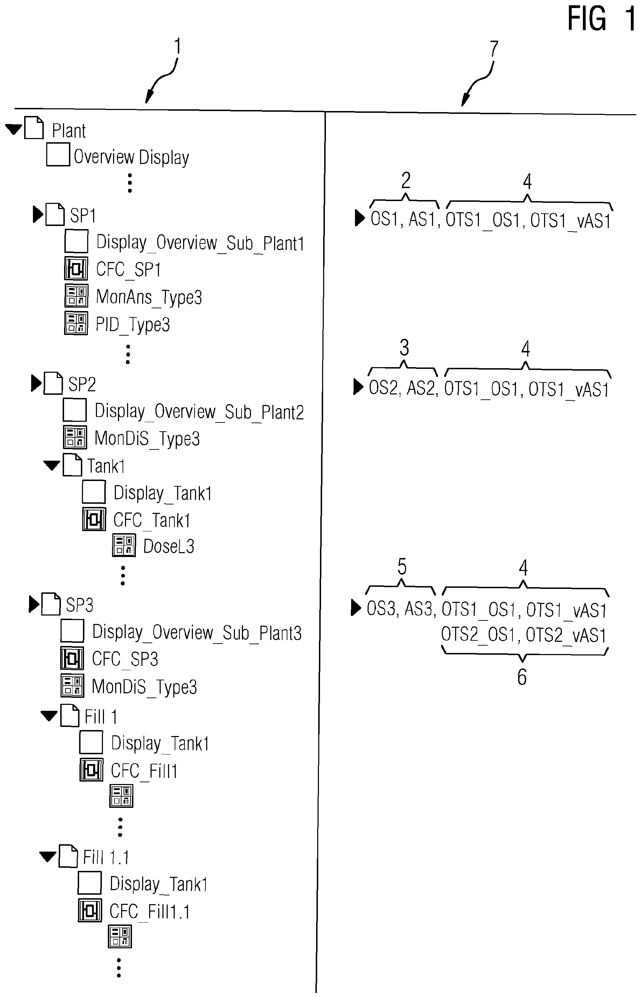

FIG 1 zeigt eine exemplarische Zuordnung von Konfigurationen zu den realen und virtuellen Automatisierungsgeräten. Hierzu sind in der linken Spalte 1 von FIG 1 Konfigurationen für drei Teilanlagen "SP1", "SP2", "SP3" in einer hierarchischen Darstellung (in der sogenannten "technologischen Hierarchie") dargestellt. Die Anlagenteile SP2 und SP3 weisen wiederum Unterteile ("Tank1", "Fill 1", "Fill 1.1") auf. Bei den Konfigurationen handelt es sich um Anlagenbilder ("Dis-play_Overview Sub_Plant1", "Display_Overview_Sub_Plant2", ""Display_Over-view_Sub_Plant3"), Prozessobjekte ("MonAnS_Type3", "MonDiS_Type3", "MonDiS_Type3", "DoseL3") und CFC-basierte Pläne ("CFC_SP1", "CFC_Tank1", "CFC_SP3", "CFC_Fill1", "CFC_Fill1.1").

Im vorliegenden Ausführungsbeispiel wird eine erste Konfiguration, die Konfiguration der Teilanlage 1 (SP1) einer ersten Gruppe 2 von realen Automatisierungsgeräten (OS1 und AS1) zugewiesen, die in der rechten Spalte 7 in FIG 1 abgebildet sind. Dies bedeutet hier, dass die in der enthaltene CFCs, SFCs, usw. durch AS1 abgearbeitet und die Anlagenbilder durch OS1 bereitgestellt werden. Eine zweite Konfiguration, die Konfiguration der Teilanlage 2 (SP2) wird einer zweiten Gruppe 3 von realen Automatisierungsgeräten (OS2 und AS2) zugewiesen.

Die erste Konfiguration wird zudem einer ersten Gruppe 4 von virtuellen Automatisierungsgeräten (OTS1_OS1, OTS1_vAS1) zugewiesen. Die zweite Konfiguration wird zusätzlich auch der ersten Gruppe von virtuellen Automatisierungsgeräten (OTS1_OS1, OTS1_vAS1) zugewiesen.

Eine dritte Konfiguration, die Konfiguration der Teilanlage 3 (SP3) wird einer dritten Gruppe 5 von realen Automatisierungsgeräten (OS3 und AS3) zugewiesen. Die dritte Konfiguration wird zudem der ersten Gruppe 4 von virtuellen Automatisierungsgeräten (OTS1_OS1, OTS1_vAS1) und einer zweiten Gruppe 6 von virtuellen Automatisierungsgeräten (OTS2_OS1, OTS2_vAS1) zugewiesen.

Durch die vorliegende Erfindung können die Konfigurationen neben den realen, produktiven Automatisierungsgeräten (die nach wie vor jedem Anlagenteil nur einmal zugewiesen werden können) zusätzlich noch den virtuellen Automatisierungsgeräten der Schulungsanlagen zugewiesen werden - auch mehrfach und vor allem auch unterschiedlich.

So soll für die Schulungsanlage OTS1 die Teilanlagen SP1, SP2 und SP3 lediglich den virtuellen Automatisierungsgeräten OTS1_OS1 und OTS1_vAS1 zugewiesen werden - d.h. die Schulungsanlage soll für dieselbe Technologie lediglich zwei Geräte (minimalistisch) nutzen. Weiterhin ist noch eine reduzierte Schulungsanlage vorgesehen, anhand derer nur Szenarien der Teilanlage 3 (SP3) geschult werden sollen - hierfür sollen die dafür vorgesehenen virtuellen Automatisierungsgeräte OTS2_OS1 und OST2_vAS1 genutzt werden. Die flexible Zuweisung der Komponenten der technologischen Hierarchie zu den realen und virtuellen Automatisierungsgeräten der technischen Anlage hat den Vorteil, dass mit derselben Technologie minimalistische Gerätekonfigurationen der Schulungsanlagen adressiert werden können. So kann beispielsweise das virtuelle Automatisierungsgerät OTS1_OS1 direkt aus der zentralen Projektierung geladen werden, mit dem Umfang SP1, SP2 und SP3. Die Projektierung bildet hierbei automatisch den zu ladenden Inhalt auf die jeweilige Gerätekonfiguration ab.

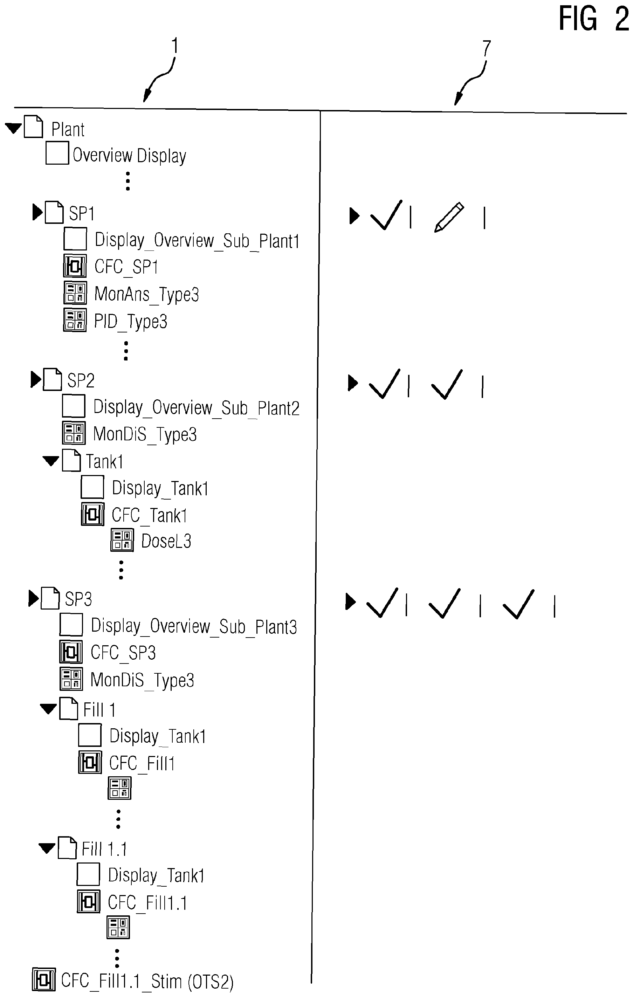

Ein weiterer Vorteil der Erfindung kommt zum Tragen, wenn das computerimplementierte Werkzeug noch einen Ladezustand bei den Übertragungen der Konfigurationen zu den Automatisierungsgeräten abbildet. In FIG 2 ist in der rechten Spalte 7 symbolisch dargestellt, welchen Ladezustand / Übertragungsstatus die einzelnen Konfigurationen bezüglich der einzelnen Automatisierungsgeräte aufweisen. Die erste Konfiguration der ersten Teilanlage SP1 ist vollständig auf die erste Gruppe 2 von realen Automatisierungsgeräten übertragen worden (symbolisiert durch einen Haken), während sie auf die erste Gruppe 4 von virtuellen Automatisierungsgeräten noch nicht vollständig übertragen worden ist (symbolisiert durch einen Stift).

Die zweite Konfiguration der zweiten Teilanlage SP2 ist vollständig auf die zweite Gruppe 3 von realen Automatisierungsgeräten und auf die erste Gruppe 4 von virtuellen Automatisierungsgeräten übertragen worden (symbolisiert durch zwei Haken).

Die dritte Konfiguration der dritten Teilanlage SP3 ist vollständig auf die dritte Gruppe 5 von realen Automatisierungsgeräten, auf die erste Gruppe 4 und die zweite Gruppe 6 von virtuellen Automatisierungsgeräten übertragen worden (symbolisiert durch drei Haken).

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Computerimplementiertes Werkzeug zum Erzeugen einer Automatisierung für eine technische Anlage, insbesondere Prozess- oder Fertigungsanlage, welches dazu ausgebildet ist:
- eine erste Konfiguration für eine erste Gruppe (2) von real in der technischen Anlage verwendeten Automatisierungsgeräten zu erzeugen, die erste Konfiguration der ersten Gruppe (2) von real in der technischen Anlage verwendeten Automatisierungsgeräten zuzuweisen und die erste Konfiguration an die erste Gruppe (2) von real in der technischen Anlage verwendeten Automatisierungsgeräten zu übertragen, und
- eine zweite Konfiguration für eine zweite, von der ersten Gruppe (2) verschiedenen Gruppe (3) von real in der technischen Anlage verwendeten Automatisierungsgeräten zu erzeugen, die zweite Konfiguration der zweiten Gruppe (3) von real in der technischen Anlage verwendeten Automatisierungsgeräten zuzuweisen und die zweite Konfiguration an die zweite Gruppe (3) von real in der technischen Anlage verwendeten Automatisierungsgeräten zu übertragen,
**dadurch gekennzeichnet, dass**
das computerimplementierte Werkzeug dazu ausgebildet ist:
- die erste Konfiguration zusätzlich einer ersten Gruppe (4) von virtuellen Automatisierungsgeräten zuzuweisen und die zugewiesene erste Konfiguration an eine computerimplementierte Virtualisierungsumgebung zu übertragen, welche die erste Gruppe (4) von virtuellen Automatisierungsgeräten bereitstellt, und
- die zweite Konfiguration zusätzlich der ersten Gruppe (4) von virtuellen Automatisierungsgeräten und die zugewiesene erste Konfiguration an die computerimplementierte Virtualisierungsumgebung zu übertragen, welche die erste Gruppe (4) von virtuellen Automatisierungsgeräten bereitstellt.

2. Computerimplementiertes Werkzeug nach Anspruch 1, das dazu ausgebildet ist, einen Status der jeweiligen Übertragung der Konfigurationen an die realen und virtuellen Automatisierungsgeräte zu ermitteln und visuell darzustellen.

3. Computerimplementiertes Werkzeug nach Anspruch 1 oder 2, das dazu ausgebildet ist, die erste oder die zweite Konfiguration zusätzlich einer zweiten, von der ersten Gruppe (4) verschiedenen Gruppe (6) von virtuellen Automatisierungsgeräten zuzuweisen und die zugewiesene erste Konfiguration oder zweite Konfiguration an die computerimplementierte Virtualisierungsumgebung zu übertragen, welche die erste Gruppe (4) und die zweite Gruppe (6) von virtuellen Automatisierungsgeräten bereitstellt.

4. Computerimplementiertes Werkzeug nach einem der vorangegangenen Ansprüche, bei dem die Konfigurationen Anlagenbilder, CFC-basierte Pläne, SFC-basierte Pläne, Prozessobjekte und/oder Konnektivitätsobjekte umfassen.

5. Automatisierungssystem, umfassend einen Engineering Station Server mit einem hierauf computerimplementierten Werkzeug nach einem der Ansprüche 1 bis 4 und einen Virtualisierungsrechner mit einer hierauf computerimplementierten Virtualisierungsumgebung.

6. Automatisierungssystem nach Anspruch 5, bei dem der Virtualisierungsrechner dazu ausgebildet ist, die von dem Engineering Station Server an den Virtualisierungsrechner übermittelten Konfigurationen dafür zu verwenden, die virtuellen Automatisierungsgeräte zu betreiben.

7. Verfahren, umfassend:
a) Durch ein computerimplementiertes Werkzeug, Erzeugen einer ersten Konfiguration für eine erste Gruppe (2) von real in der technischen Anlage verwendeten Automatisierungsgeräten,
b) Durch das computerimplementierte Werkzeug, Zuweisen der ersten Konfiguration zu der ersten Gruppe (2) von real in der technischen Anlage verwendeten Automatisierungsgeräten,
c) Durch das computerimplementierte Werkzeug, Übertragen der ersten Konfiguration an die erste Gruppe (2) von real in der technischen Anlage verwendeten Automatisierungsgeräten,
d) Durch das computerimplementierte Werkzeug, Erzeugen einer zweiten Konfiguration für eine zweite, von der ersten Gruppe (2) verschiedenen Gruppe (3) von real in der technischen Anlage verwendeten Automatisierungsgeräten,
e) Durch das computerimplementierte Werkzeug, Zuweisen der zweiten Konfiguration zu der zweiten Gruppe (3) von real in der technischen Anlage verwendeten Automatisierungsgeräten,
f) Durch das computerimplementierte Werkzeug, Übertragen der ersten Konfiguration an die zweite Gruppe (3) von real in der technischen Anlage verwendeten Automatisierungsgeräten,
g) Durch das computerimplementierte Werkzeug, zusätzliches Zuweisen der ersten Konfiguration zu einer ersten Gruppe (4) von virtuellen Automatisierungsgeräten,
h) Durch das computerimplementierte Werkzeug, Übertragen der zugewiesenen ersten Konfiguration an eine computerimplementierte Virtualisierungsumgebung, welche die erste Gruppe (4) von virtuellen Automatisierungsgeräte bereitstellt,
i) Durch das computerimplementierte Werkzeug, zusätzliches Zuweisen der zweiten Konfiguration zu der ersten Gruppe (4) von virtuellen Automatisierungsgeräten,
j) Durch das computerimplementierte Werkzeug, Übertragen der zugewiesenen ersten Konfiguration an eine computerimplementierte Virtualisierungsumgebung, welche die erste Gruppe (4) von virtuellen Automatisierungsgeräte bereitstellt.

8. Verfahren nach Anspruch 7, bei dem die erste oder die zweite Konfiguration durch das computerimplementierte Werkzeug zusätzlich einer zweiten, von der ersten Gruppe (4) verschiedenen Gruppe (6) von virtuellen Automatisierungsgeräten zugewiesen werden, und die zugewiesene erste Konfiguration oder zweite Konfiguration an die computerimplementierte Virtualisierungsumgebung übertragen wird, welche die erste Gruppe (4) und die zweite Gruppe (6) von virtuellen Automatisierungsgeräten bereitstellt.

9. Verfahren nach Anspruch 7 oder 8, bei dem die virtuellen Automatisierungsgeräte durch die computerimplementierte Virtualisierungsumgebung unter Verwendung der ersten, und gegebenenfalls der zweiten, Konfiguration betrieben werden.

10. Verwendung eines Automatisierungssystems gemäß Anspruch 5 oder 6 zur Schulung eines Operators einer technischen Anlage.
